# EUROPEAN PATENT SPECIFICATION

(11) **EP 2 770 436 B1**
(45) Date of publication and mention of the grant of the patent: **14.11.2018**
(21) Application number: 14155810.6
(22) Date of filing: 19.02.2014
(51) Int. Cl.: G06F 11/30, G06F 11/32, G06F 3/12, G06F 3/048

(54) **Terminal device and computer program**
Endgerät und Computerprogramm
Terminal et programme informatique

(30) Priority: 21.02.2013 JP 2013032657
(43) Date of publication of application: 27.08.2014
(73) Proprietor: Brother Kogyo Kabushiki Kaisha, Nagoya, Aichi 467-8561 (JP)
(72) Inventor: Yamada, Ryuji, Nagoya, Aichi 467-8562 (JP)
(74) Representative: J A Kemp

(56) References cited:
- EP-A2- 2 549 373
- JP-A- 2007 041 840
- JP-A- 2010 016 563
- US-A1- 2006 026 474
- US-A1- 2013 027 737

## Description

### TECHNICAL FIELD

Aspects of the present invention relate to a technique which provides information relating to a product, and more particularly, to a technique which provides information relating to a product to a user according to the display state of a display lamp of the product.

### BACKGROUND

There has been known a technique which specifies information relating to a state of display lamps provided in a product. For example, JP-A-2005-242915 discloses a technique where a monitoring device, which is attached to a rack of a server computer (a target product), detects by a monitoring camera a lighting state of an alarm LED which is provided in the server computer and indicates an abnormality. The monitoring device transmits information representing warning details according to the detected lighting state to a management computer.

However, according to the above-described technique, for example, if there is an error in detection by the camera, or the like, there is a possibility that appropriate information relating to the product cannot be provided to the user.

US 200310027737 A discloses an image-forming system comprising an image-forming device and a portable terminal. The image-forming device has a state-detecting part and a panel part that includes a plurality of light-emitting elements, the panel part adapted such that a turned-on/turned-off pattern of the plurality of light-emitting elements is switched, and optical signals destined for the portable terminal and including information on the state of the image-forming device.; The portable terminal has an image-capturing part, a storage part for storing an application, a display part for displaying an image and a screen, and a processing part a processing part for identifying, based on the application, the information on the state of the image-forming device included in the optical signals from image data obtained as a result of the image-capturing part capturing an image of the panel part, and for displaying, the state of the image-forming device on the display part. US 2006/0026474 A discloses that, when an emission pattern of LEDs of an operation panel of a printer is merely pseudo-displayed on display portions of a local computer and a server computer, a piece of error handling information corresponding to a pseudo pattern of the emission pattern can be acquired. Accordingly, a user can easily handle a generated error without any knowledge about the factor of the error and without any instruction manual. EP 2 549 373 A discloses a host device including a communication interface unit to receive status information from an image forming apparatus, an error processing unit to control the communication interface unit to transmit error information including the status information to the management server if it is determined that the image forming apparatus has an error according to the received status information, and a user interface unit to display a video manual if a URL address providing a video manual to solve an error of the image forming apparatus is received from the management server. JP 2010 016563 A aims to improve the determination precision of an operation state of a target device even when using a mobile terminal as a versatile imaging means. A mobile phone includes; an imaging unit; an image synthesis part which displays an imaging range captures by the imaging unit and displays a photographic guide mark corresponding to a target device, over the imaging range; an operation state information storage part wherein information about the position and display state of a state display part within the imaging range according with the photographic guide mark is stored in association with operation state information about the target device; a device state determination part which extracts operation state information corresponding to the position and display state of the state display part in an image frame generated by the imaging unit, from the operation state information storage part on the basis of the image frame and determines an operation state of the target device on the basis of the operation state information; and a state display part which outputs countermeasure information for the operation state.

### SUMMARY

Accordingly, an aspect of the present invention provides a technique to appropriately provide information relating to a product to a user.

The present invention has been accomplished in order to achieve at least a part of the above-described objects, and can be realized in the following application examples.
(1) There is provided a computer program for a terminal device as defined in appended claim 1.
   According to this configuration, it is possible to display the state related information according to the display state of the display lamps specified by the input information input by the user. As a result, it is possible to provide appropriate state related information relating to the state of the target product to the user.
   According to this configuration, since the state related information is acquired from the server connected through the network, it is not necessary to keep the state related information on the terminal device side, and as a result, it is possible to save the resources of the terminal device.
(2) In the computer program according to (1), the identification information acquiring function may acquire the identification information from a storage unit in the terminal device.
   According to this configuration, since the identification information is acquired from the storage unit in the terminal device, it is possible to reduce the amount of communication with the server compared to a case where the identification information is acquired from the server.
   With this configuration, when the target product is in a first state and a second state, the identification information for identifying different kinds of state related information is acquired. As a result, it is possible to appropriately provide the state related information relating to the first state and the second state to the user.
(3) The computer program according to (1) or (2), may further cause the computer to perform a product information acquiring function of acquiring product information for identifying a type of the target product, and the identification information acquiring function may acquire the identification information for identifying the state related information according to the product information and the specified display state of the one or more display lamps.
   According to this configuration, it is possible to provide appropriate state related information to the user according to the type of target product and the state of the target product.
(4) The computer program according to any one of (1) to (3), may further cause the computer to perform a feature information acquiring function of acquiring feature information representing a feature associated with one or more display lamps which are different between types of the target product, and the input information acquiring function may include a reception image display function of displaying a reception image by using the feature information, the reception image being for receiving input of the input information by the user on a display unit of the terminal device.
   According to this configuration, it is possible to display an appropriate reception image in accordance with features for each model.
(5) In the computer program according to (4), the feature information may include product image data which represents an image of a specific region on the target product, the specific region including the one or more display lamps, and the reception image display function may display the reception image including the image of the specific region, on the display unit.
   According to this configuration, since the reception image including the image of display lamps different between respective types of the target product is displayed, it is possible to allow the user to easily input information which represents the display state of the display lamps.
(6) In the computer program according to (5), the reception image may include: a first reception element which is associated with a position of a first display lamp in the image of the specific region to receive input of information representing a display state of the first display lamp, and a second reception element which is associated with a position of a second display lamp in the image of the specific region to receive input of information representing a display state of the second display lamp.
   According to this configuration, since the display lamps and the reception elements are associated with each other in the reception image, it is possible to allow the user to easily input information representing the display state of the display lamps.
(7) In the computer program according to (4) or (5), the feature information may include information representing a plurality of allowable display states which a first display lamp is allowable to represent, and information representing a plurality of allowable display states which a second display lamp is allowable to represent, the reception image may include: a first reception element for receiving input of the input information representing the display state of the first display lamp; and a second reception element for receiving input of the input information representing the display state of the second display lamp. The first reception element in the reception image may include a selection region for allowing the user to select one option among M options corresponding to M allowable display states (where M is a natural number equal to or greater than two) of the first display lamp, and the second reception element in the reception image may include a selection region for allowing the user to select one option among N options corresponding to N allowable display states (where N is a natural number larger than M and is equal to or greater than three) of the second display lamp.
   According to this configuration, the user just selects the options displayed for each display lamp in the reception image, thereby easily inputting information representing the display state of the display lamps.
(8) In the computer program according to any one of (1) to (7), the input information acquiring function may include a reception image display function of displaying a first reception image for receiving input of the input information on a display unit of the terminal device, and when receiving input of the input information, the reception image display function may display a second reception image obtained by updating the first reception image according to the input information on the display unit, instead of the first reception image.

According to this configuration, if the input of the input information is received, since the reception image is updated, it is possible to allow the user to easily recognize the input situation of the input information.

In the computer program according to any one of (1) to (8), the identification information acquiring function may acquire: when the display state of the one or more display lamps represented by the input information represents that the target product is in a first state, the identification information for identifying first state related information, and when the display state of the one or more display lamps represented by the input information represents that the target product is in a second state, the identification information for identifying second state related information.

The present invention can be realized in various forms, and for example, can be realized in the form of a terminal device according to appended independent claim 12.

### BRIEF DESCRIPTION OF THE DRAWINGS

The above and other aspects of the present invention will become more apparent and more readily appreciated from the following description of illustrative embodiments of the present invention taken in conjunction with the attached drawings, in which:
Fig. 1 is a block diagram showing a configuration of an information providing system according to a first illustrative embodiment;
Fig. 2 is an outer perspective view of a printer 200;
Fig. 3 is an enlarged view of a specific region 100 of the printer 200;
Fig. 4 is a diagram showing an example of a URL table DT1;
Fig. 5 is a diagram showing an example of a display state table DT2;
Fig. 6 is a flowchart of information providing processing;
Fig. 7 is a flowchart of information providing processing;
Figs. 8A to 8D are diagrams showing examples of a UI image which is displayed by an information providing unit 300; and
Figs. 9A to 9D are diagrams showing examples of a UI image which is displayed by the information providing unit 300.

### DETAILED DESCRIPTION

### A. First Illustrative Embodiment

### A-1. System Configuration

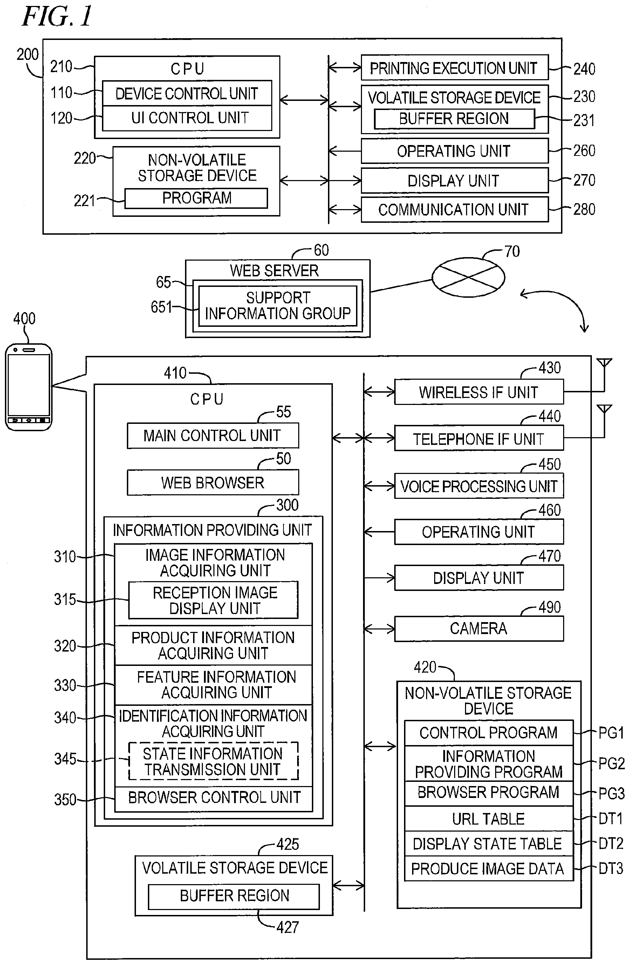

An illustrative embodiment of the present invention will be described with reference to the accompanying drawings. Fig. 1 is a block diagram showing a configuration of an information providing system according to a first illustrative embodiment. This system includes a printer 200, a server 60 connected to Internet 70, and a portable terminal 400.

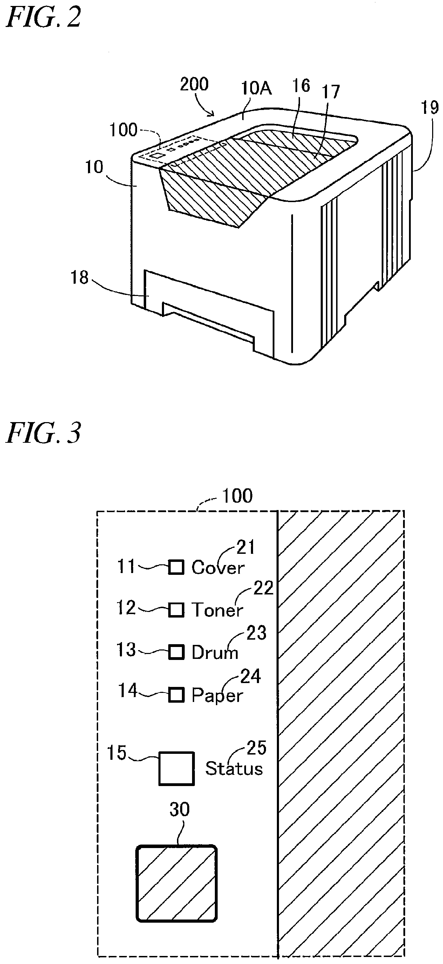

The printer 200 includes a CPU 210, a non-volatile storage device 220, such as a hard disk drive or a flash memory, a volatile storage device 230, such as a RAM, a printing execution unit 240 which is a laser print engine, an operating unit 260 which includes one operation button 30 (Fig. 3) (described below), a display unit 270 which includes a plurality of display lamps 11 to 15 (described below), and a communication unit 280 which includes an interface for performing data communication with an external device, such as a personal computer (not shown). The operating unit 260 of this illustrative embodiment does not include many buttons or a touch panel. The display unit 270 does not include a display panel, such as a liquid crystal display. A complicated operation, such as various settings, is made through a printer driver installed on a personal computer (not shown) or the like.

The volatile storage device 230 includes a buffer region 231 which temporarily stores various intermediate data generated when the CPU 210 performs processing. The non-volatile storage device 220 stores a computer program 221 for controlling the printer 200.

The computer program 221 is stored in, for example, the non-volatile storage device 220 in advance upon shipment of the printer 200. The computer program 221 may be provided in the form recorded in a CD-ROM or the like or in the form to be downloaded from a server.

The CPU 210 executes the computer program 221 to control the entire printer 200. Specifically, the CPU 210 functions as a device control unit 110 and a UI control unit 120. The device control unit 110 performs control such that the printing execution unit 240 realizes the main function, such as printing processing, of the printer 200. The UI control unit 120 performs control relating to a user interface using the operating unit 260, the display unit 270, or the like, that is, receives operation from the user through the operating unit 260, provides information associated with the printer 200 to the user through the display unit 270, or the like.

Fig. 2 is an outer perspective view of the printer 200. Fig. 3 is an enlarged view of a specific region 100 of the printer 200. As shown in Fig. 2, the printer 200 includes a housing 10 having a rectangular parallelepiped shape. In the bottom portion of the housing 10, a paper tray 18 which stores papers is mounted to be drawable from the front lateral surface. In the rear lateral surface of the housing 10, a cover 19 is openably mounted. For example, the cover 19 is opened/closed when eliminating paper jam or when replacing toner cartridge or the like. In a top surface 10A of the housing 10, an opening 16 through which a printed paper is discharged is formed, and a top surface member 17 which functions as a discharge tray for storing the printed paper discharged from the opening 16 is provided.

As shown in Fig. 3, in a specific region 100 at a corner in the top surface 10A of the housing 10, the plurality of display lamps 11 to 15 and one operation button 30 are arranged. The plurality of display lamps 11 to 15 are arranged at substantially regular intervals along a lamp arrangement line LL in a Y direction of Fig. 3. The plurality of display lamps 11 to 15 are configured by, for example, LEDs, and are used to display a plurality of device states of the printer 200, for example, a normal state (for example, a print job standby state or a printing state) and an error state (for example, a state of a toner empty or a state of out of paper).

Near the plurality of display lamps 11 to 15, specifically, on the right side (+X direction) of Fig. 3, character strings 21 to 25 relating to the corresponding display lamps are marked. For example, the character string 21 corresponding to the display lamp 11 is "Cover", and represents that the display lamp 11 is used to display the state relating to the cover 19.

Incidentally, the number of display lamps and the position and size of each display lamp may differ depending on the type of printer. For example, the number of display lamps is not limited to five (Fig. 3), and there is a model having four display lamps or a model having three display lamps.

The server 60 is a known computer, and executes a server program (not shown) to provide a Web service to the portable terminal 400 or a client computer, such as a personal computer (not shown). The Web service is a service which provides support information to the user, and a storage unit 65 of the server 60 stores a support information group 651 for supporting the user of the printer 200 in a format of a Web page. For example, the server 60 is operated by a vendor who sells the printer 200 as a product.

The portable terminal 400 is, for example, a multi-function mobile phone, such as a smartphone, owned by the user of the printer 200. The portable terminal 400 includes a CPU 410, a non-volatile storage device 420, such as a flash memory, a volatile storage device 425 including a RAM or the like and used as a buffer region 427, a wireless IF unit 430, a telephone IF unit 440, a voice processing unit 450 which includes a speaker and a microphone and realizes a telephone function or the like, an operating unit 460 which includes a touch panel, operation keys, and the like, a display unit 470 which includes a liquid crystal panel or the like overlapped on the touch panel, and a camera 490 which performs imaging by using an image sensor.

The wireless IF unit 430 includes an antenna, and for example, performs wireless communication (wireless communication based on an infrastructure mode) through an access point (not shown). As described below, the wireless IF unit 430 is used when the portable terminal 400 accesses the server 60, or the like.

The telephone IF unit 440 includes an antenna, and performs wireless communication based on a mobile phone communication system (for example, W-CDMA) with a base station (not shown). The telephone IF unit 440 realizes, for example, a telephone, the connection to Internet 70 through the base station (not shown), and the like. Similarly to the wireless IF unit 430, the telephone IF unit 440 is used when the portable terminal 400 accesses the server 60, or the like.

The camera 490 can generate and acquire image data representing an imaging object (target) using an imaging element, such as a CCD or a CMOS.

The non-volatile storage device 420 stores a control program PG1, an information providing program PG2, a browser program PG3, a URL table DT1 in which a URL (Uniform Resource Locator) is described, a display state information table DT2 in which display state information is described, and a product image data DT3.

The control program PG1 is a program which realizes a function of an OS (Operating System), a telephone function, a control function of the camera 490, and a basic function of the portable terminal 400. The browser program PG3 is a program which realizes a function as a Web browser for viewing a Web page. For example, the control program PG1 and the browser program PG3 are provided by the manufacturer of the portable terminal 400 and stored in advance upon shipment. The information providing program PG2 is a program which realizes processing for providing information relating to the printer 200 to the user in cooperation with the server 60. The information providing program PG2 is a program (also referred to as "application") which adds a new function to the portable terminal 400, and is provided by, for example, a provider (for example, the manufacturer of the printer 200) different from the manufacturer of the portable terminal 400 in the form to be downloaded from a predetermined server. Incidentally, the information providing program PG2 may be provided by the manufacturer of the portable terminal 400 or may be stored in advance upon shipment.

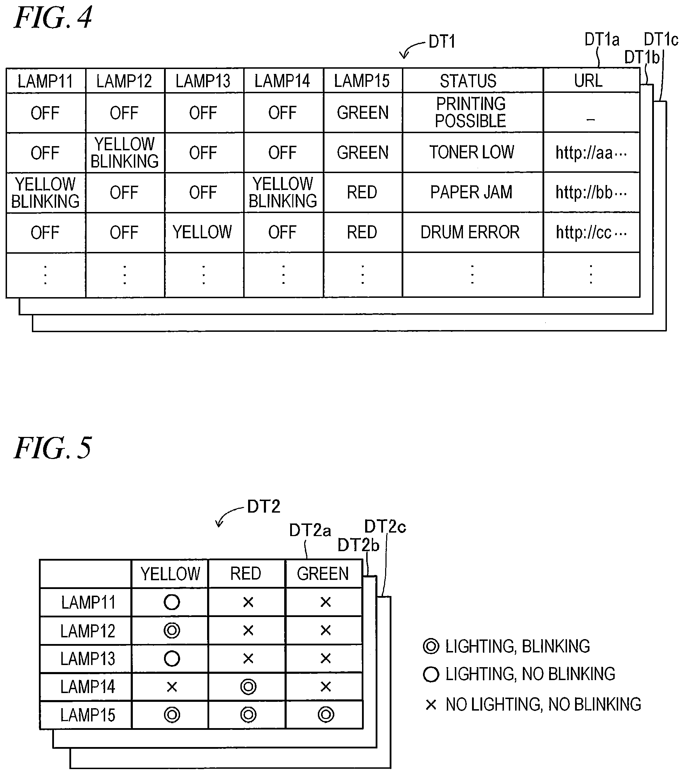

Fig. 4 is a diagram showing an example of the URL table DT1. The URL table DT1 includes a plurality of tables DT1a to DT1c corresponding to a plurality of types of printers (including the printer 200) to be subjected to information providing processing (described below). For example, a plurality of tables DT1a to DT1c record a state (status) of a printer and a URL used for acquiring information corresponding to the state of the printer in association with the display state of a plurality of display lamps. For example, in the table DT1a corresponding to a specific printer model (for example, the printer 200), a first state "Toner low " (a state where the toner cartridge is near the end of its expected life and will need to be replaced soon) of a printer and a first URL "http://aa..." are associated with the first display state of the plurality of display lamps 11 to 15. The first display state is a display state in which the display lamp 12 is "yellow blinking", the display lamp 15 is "green lighting", and other display lamps 11, 13, and 14 are "off". In the table DT1a, a second state "paper jam" (a state where a paper jammed in the printing execution unit and printing cannot be executed) of a printer and a second URL "http://bb..." are associated with a second display state of the plurality of display lamps 11 to 15. The second display state is a display state in which the display lamp 11 and the display lamp 14 are "yellow blinking", the display lamp 15 is "red lighting", and other display lamps 12 and 13 are "off".

The URL (Uniform Resource Locator) is location information which represents the location in the server 60 of a Web page including support information associated with a state of a corresponding printer (also referred to a display state corresponding to a plurality of display lamps). The support information includes, for example, information associated with the error state, specifically, information relating to a solution to error, consumables (toner or photosensitive drum) necessary for solving an error, and the like. The support information is an example of state related information. As will be understood from the situation that a table is prepared for each type (model) of printer, even if the states of the printers are identical, if the models are different, corresponding URLs may be different. This is because the type (part number) of toner or photosensitive drum to be used may differ depending on the model, and the solution to an error may be different.

Fig. 5 is a diagram showing an example of the display state table DT2. The display state table DT2 includes a plurality of tables DT2a to DT2c corresponding to a plurality of types of printers to be subjected to information providing processing. For example, in the table DTa2 corresponding to a specific printer model, an allowable display state of each of the plurality of display lamps 11 to 15 (Fig. 3) is recorded.

The display state of one display lamp is one of four kinds of "yellow", "red", "green", and "blue" from the viewpoint of the color (also referred to as "emission color") upon light emission of the display lamp. The display state of the display lamp is one of three kinds of "off", "lighting ", and "blinking" from the viewpoint of the emission form. The display state "off' is a display state in which the display lamp is maintained in a non-light emission state. The display state "lighting" is a display state in which the display lamp is maintained in a light emission state. The display state "blinking" is a display state in which the light emission state and the non-light emission state of the display lamp are repeated at a predetermined interval. In this illustrative embodiment, there are nine kinds (one kind of "off ", four kinds (four colors) of "lighting ", and four kinds (four colors) of "blinking") of display states by the combinations of the emission color and the emission form.

The display state "off' is an allowable display state of all of the display lamps, and is not recorded in the display state table DT2 of Fig. 5. In the display state table DT2 of Fig. 5, a circle described corresponding to each emission color represents an allowable display state of "lighting " for a corresponding emission color, and a double circle described corresponding to each emission color represents an allowable display state of "lighting " and "blinking" for a corresponding emission color. A cross described for each emission color represents that neither "lighting" nor "blinking" is performed in a corresponding emission color. As shown in Fig. 5, some display lamp may perform "lighting" or "blinking" in a plurality of emission colors (for example, the display lamp 15 of Fig. 5). As will be understood from the situation that a table is prepared for each type (model) of printer, an allowable display state of each display lamp may differ depending on the type of printer.

The product image data DT3 is image data which represents a main image displayed on the display unit 470 or a product image displayed in an input reception image (described below) in the information providing processing. The product image data is prepared for each of a plurality of types of printers to be subjected to the information providing processing.

Returning to Fig. 1, the CPU 410 executes the control program PG1 to function as a main control unit 55 which realizes the basic function of the portable terminal 400, and executes the browser program PG3 to function as a Web browser 50. The CPU 410 executes the information providing program PG2 to function as an information providing unit 300.

The information providing unit 300 includes an input information acquiring unit 310, a product information acquiring unit 320, a feature information acquiring unit 330, an identification information acquiring unit 340, and a browser control unit 350. The input information acquiring unit 310 includes a reception image display unit 315. The respective processing will be described below.

### A-3. Processing of Information providing unit 300 of Portable Terminal 400

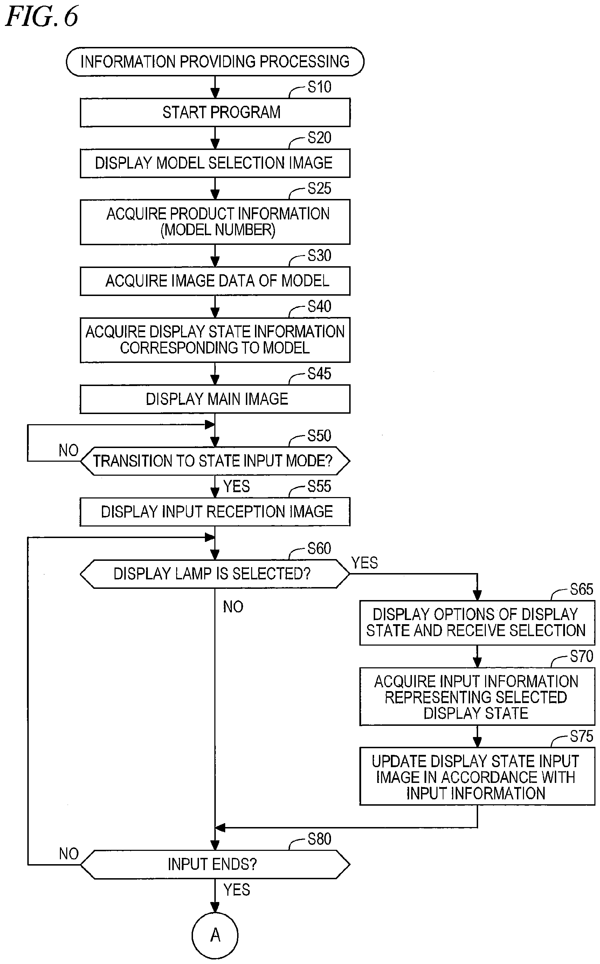

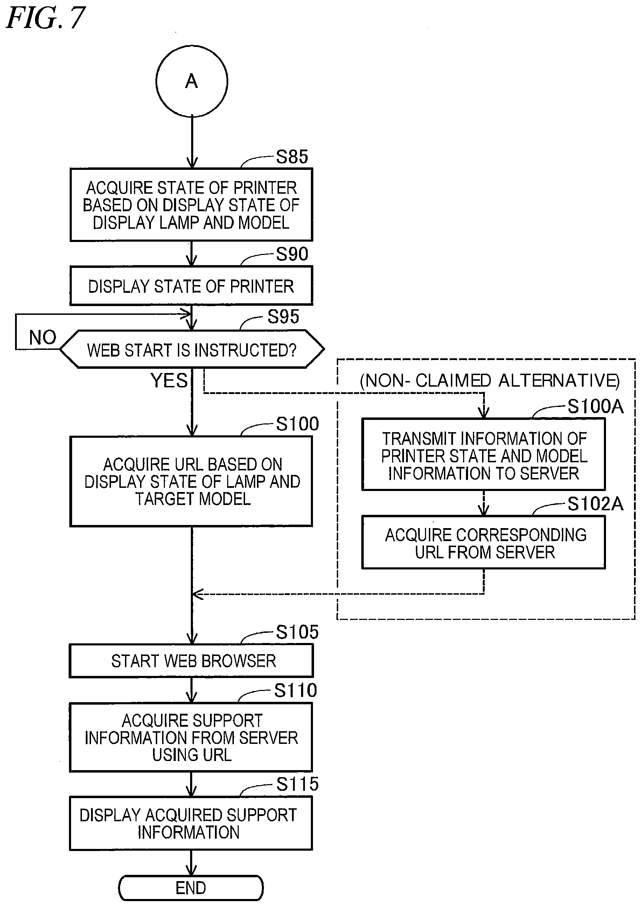

Figs. 6 and 7 are flowcharts of information providing processing. For example, if the information providing program PG2 is started by the user, the information providing processing is executed by the information providing unit 300 (Fig. 1). For example, if the plurality of display lamps 11 to 15 are in a display state which represents that the printer 200 is in a specific state, the user starts the information providing program PG2 so as to acquire information associated with the specific state of the printer 200. Specifically, for example, since the printer 200 is in an error state, such as toner empty, when the plurality of display lamps 11 to 15 become a display state which represents the error state, the user starts the information providing program PG2 so as to know a solution to the error state in detail.

In Step S10, if the information providing unit 300 (information providing program PG2) starts and the information providing unit 300 becomes in an operable state, the product information acquiring unit 320 displays a model selection image AI1 on the display unit 470 (Step S20).

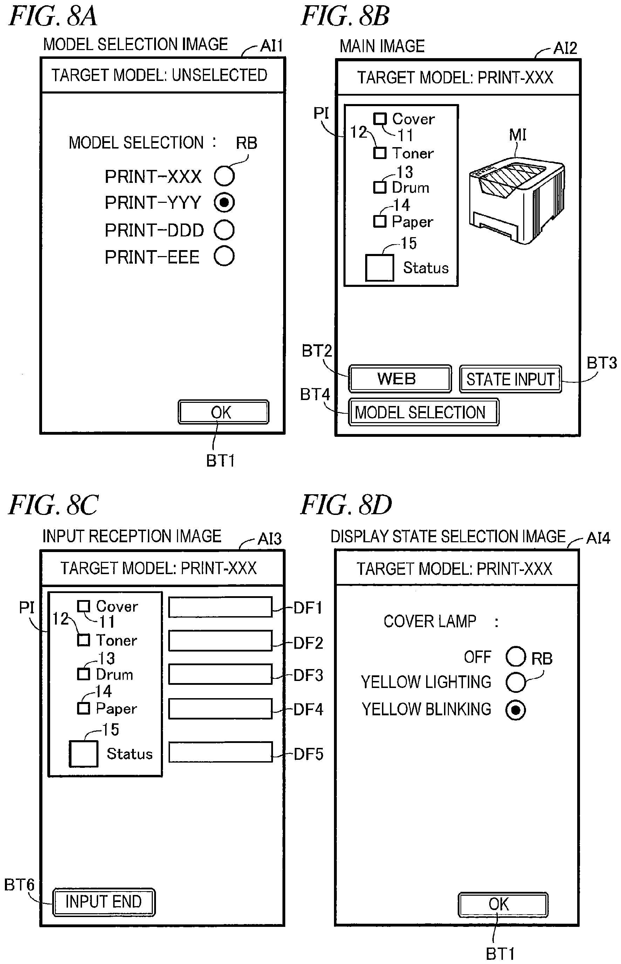

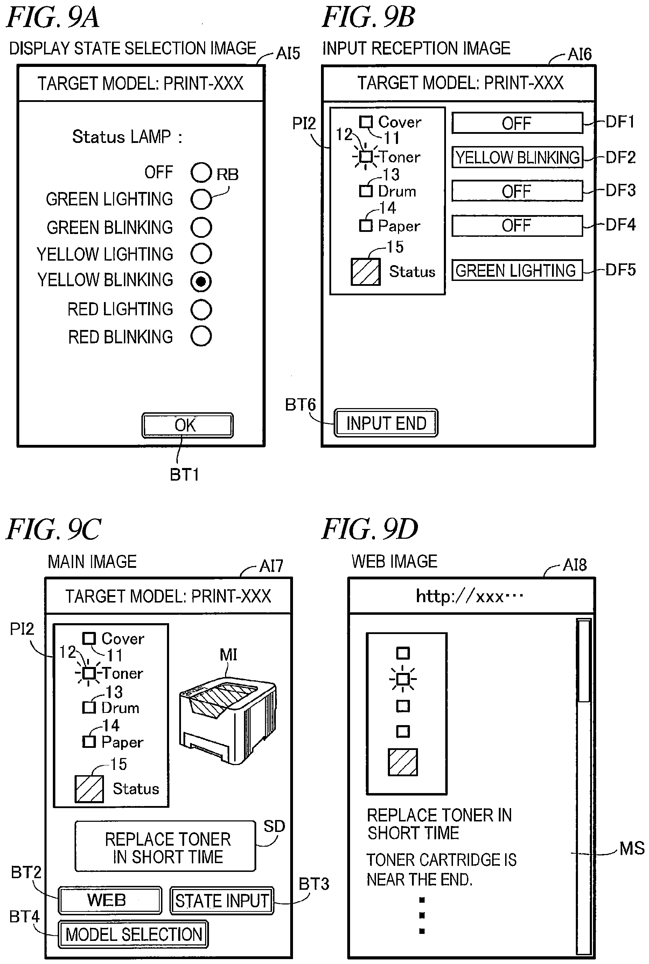

Figs. 8A to 8D and 9A to 9D are diagrams showing examples of a UI image which is displayed by the information providing unit 300. Fig. 8A shows an example of the model selection image AI1. The model selection image AI1 includes a list MN of model information (for example, also referred to as "model number" or "product information" for identifying the model of the printer, which the information providing unit 300 supports, and a plurality of radio buttons RB corresponding to the plurality of model information. The user touches an OK button BT1 after one radio button RB is ON and selects the model (target model) of the printer.

In Step S25, the product information acquiring unit 320 acquires model information (also referred to as "product information", and for example, "model number") for identifying the target model based on the selection of the user. Hereinafter, an example in which the printer 200 described referring to Figs. 1 to 3 is the target model will be described.

In Step S30, the feature information acquiring unit 330 acquires image data corresponding to the target model identified by the acquired product information out of the product image data DT3 stored in the non-volatile storage device 220. Specifically, the feature information acquiring unit 330 acquires entire image data (image data representing an entire image MI of Fig. 8B) which represents the entire region of the printer 200 of the target model and partial image data (image data representing a partial image PI of Fig. 8B) which represents the specific region 100 of the printer 200 of the target model.

In Step S40, the feature information acquiring unit 330 acquires display state information of the target model identified by the acquired product information. The display state information is information which represents an allowable display state of each of the plurality of display lamps 11 to 15 (Fig. 3), and is acquired from the display state table DT2 (Fig. 5).

In Step S45, the information providing unit 300 displays a main image AI2 according to the target model identified by the acquired model information on the display unit 470. Fig. 8B shows an example of the main image AI2. The main image AI2 includes a partial image PI of the printer 200 of the target model, the entire image MI which represents the entire region of the printer 200 of the target model, a start button BT2 which receives the start of the Web browser, a state input button BT3 which receives the transition instruction to a state input mode, and a model selection button BT4. The partial image PI and the entire image MI are represented by image data acquired in Step S30. In the example of Fig. 8B, the images of the plurality of display lamps 11 to 15 are included in the partial image PI. The model selection button BT4 is a button for the transition instruction to a model selection mode in which the model selection image AI1 is displayed and model selection is received from the user, and is pressed when changing the target model.

In Step S50, the information providing unit 300 determines whether the transition to the state input mode is instructed, that is, whether the state input button BT3 is pressed by the user. If the transition to the state input mode is not instructed (Step S50: NO), the information providing unit 300 stands by until the transition is instructed. If the transition is instructed (Step S50: YES), the information providing unit 300 transits to the state input mode. In the state input mode, first, the reception image display unit 315 of the input information acquiring unit 310 displays an input reception image AI3 for receiving the input of the display state from the user on the display unit 470 (Step S55).

Fig. 8C is a diagram showing an example of the input reception image AI3. The input reception image AI3 includes the partial image PI, a plurality of fields DF1 to DF5, and an input end button BT6. The plurality of fields DF1 to DF5 are fields for receiving the input of the display state of the plurality of display lamps 11 to 15 from the user. The plurality of fields DF1 to DF5 are displayed corresponding to the positions of the plurality of display lamps 11 to 15 in the partial image PI. That is, the plurality of fields DF1 to DF5 are arranged on the right side of the corresponding display lamps 11 to 15 in the partial image PI. For example, the field DF1 is arranged in parallel with the display lamp 11 in a horizontal direction. Since the number of fields to be displayed is equal to the number of display lamps of the target model, the number of fields differs depending on the model information acquired in Step S25. The input end button BT6 is pressed by the user if the input of the display state by the user ends.

In Step S60, the input information acquiring unit 310 determines whether a display lamp to be input is selected by the user. The user presses a field corresponding to a desired display lamp out of the plurality of fields DF1 to DF5 corresponding to the plurality of display lamps 11 to 15 to select the display lamp to be input.

If the display lamp to be input is selected (Step S60: YES), the reception image display unit 315 displays a display state selection image including a plurality of options corresponding to a plurality of allowable display states of the selected display lamp on the display unit 470, and receives the selection of the user (Step S65).

Figs. 8D and 9A show an example of a display state selection image. A display state selection image AI4 of Fig. 8D is a selection image for the display lamp 11, and includes three options corresponding to three allowable display states (off, yellow lighting, yellow blinking) of the display lamp 12, three radio buttons RB for receiving the selection of the respective options, and an OK button BT1. A display state selection image AI5 of Fig. 9A is a selection image for the display lamp 15, and includes seven options corresponding to seven allowable display states (off, green lighting, green blinking, yellow lighting, yellow blinking, red lighting, and red blinking) of the display lamp 15, seven radio buttons for receiving the selection of the respective options, and an OK button BT1. The options to be displayed are determined based on the display state information acquired in Step S40. The three options or seven options shown in Fig. 8D or 9A are just an example, and in general, it is preferable that a display state selection image for receiving input information representing the display state of a first display lamp includes a selection region (for example, a region where the radio button RB or options are displayed) for allowing the user to select one option out of M options corresponding to M allowable display states (where M is a natural number equal to or greater than two) of the first display lamp. It is preferable that a display state selection image for receiving input information representing the display state of a second display lamp includes a selection region for allowing the user to select one option out of N options corresponding to N allowable display states (where N is a natural number larger than M and is equal to or greater than three) of the second display lamp.

The user selects the radio button RB corresponding to the option of the display state to be input out of the options displayed in the display state selection image AI4 or AI5, and presses the OK button BT1. In Step S70, the input information acquiring unit 310 acquires input information which represents the display state (off, yellow blinking, or the like) selected by the user.

In Step S75, the reception image display unit 315 displays the input reception image AI6 obtained by updating the input reception image AI3 in accordance with the acquired input information on the display unit 470, instead of the input reception image AI3. Fig. 9B shows an example of the input reception image AI6 after update. In each of the plurality of fields DF1 to DF5 in the input reception image AI6 of Fig. 9B, the display state input by the user is displayed. In the partial image PI2 of the input reception image AI6, the images (for example, the images of the display lamps 12 and 15 of Fig. 9B) of the display lamps are updated in accordance with the display state of the display lamps specified by the acquired input information. In this way, if the input information is acquired, since the reception image is updated, it is possible to allow the user to easily recognize the input situation of the input information. For example, the update of the input reception image is performed each time the input information relating to one display lamp is acquired.

If the display lamp to be input is not selected (Step S60: NO) and after the input reception image AI6 after update is displayed (Step S75), the input information acquiring unit 310 determines whether the input of the display state of the display lamps ends. Specifically, the input information acquiring unit 310 determines whether the input end button BT6 of the input reception image AI6 is pressed.

If the input of the display state does not end (Step S80: NO), the input information acquiring unit 310 returns to Step S60, and repeats the processing of Steps S60 to S75 described above. If the input of the display state ends (Step S80: YES), the input information acquiring unit 310 proceeds to Step S85 of Fig. 7. If the process proceeds to Step S85, the input information representing the display state of all of the display lamps 11 to 15 is acquired by the input information acquiring unit 310.

In Step S85, the identification information acquiring unit 340 acquires the state of the printer of the target model based on the display state of the display lamps represented by the input information and the target model. For example, the identification information acquiring unit 340 refers to the tables (Fig. 4) of the target model in the URL table DT1, and acquires the state of the printer associated with the display state of the display lamps. For example, if the table DT1a of Fig. 4 is referred to, and if the display state of the plurality of display lamps 11 to 15 represented by the input information is "off', "yellow blinking", "off", "off", and "green lighting", "Residual toner amount: Small" is acquired as the state of the printer 200.

In Step S90, the information providing unit 300 displays the state of the printer acquired in Step S85 on the display unit 470. For example, as shown in Fig. 9C, the information providing unit 300 displays a main image AI7, which includes a display SD representing the state of the printer, on the display unit 470.

In Step S95, the information providing unit 300 determines whether the start of the Web is instructed, that is, whether the start button BT2 of the main image AI7 is pressed. If the start of the Web is not instructed (Step S95: NO), the information providing unit 300 stands by until the start is instructed, and if the start is instructed (Step S95: YES), the information providing unit 300 proceeds to Step S100.

In Step S100, the identification information acquiring unit 340 acquires a URL as identification information based on the display state of the display lamps and the target model. Specifically, the identification information acquiring unit 340 refers to the tables (Fig. 4) of the target model in the URL table DT1, and acquires a URL associated with the specified display state of the display lamps. For example, if the table DT1a of Fig. 4 is referred to, and the display state of the display lamps 11 to 15 represented by the input information is "off", "yellow blinking", "off", "off", and "green lighting", "http://aa..." is acquired as a URL.

In Step S105, the browser control unit 350 causes the CPU 410 to execute the browser program PG3 (Fig. 1) so as to start the Web browser 50 (Fig. 1) and passes the URL acquired in Step S100 to the Web browser 50.

In Step S110, the Web browser 50 acquires support information from the server 60 based on the URL acquired from the browser control unit 350. For example, if the URL acquired from the browser control unit 370 is the first URL (for example, "http://aa..." of Fig. 4), first support information identified by the first URL is acquired from the first storage region (for example, a storage region corresponding to a specific folder) in the storage unit 65 of the server 60, which is identified by the first URL. Similarly, for example, if the URL acquired from the browser control unit 370 is the second URL (for example, "http://cc..." of Fig. 4), second support information identified by the second URL is acquired from a second storage region in the storage unit 65 of the server 60, which is identified by the second URL. In Step S115, the Web browser 50 displays the acquired support information on the display unit 470. In other words, the browser control unit 370 acquires support information as state related information using the Web browser 50, and also displays the acquired support information on the display unit 470 using the Web browser 50. That is, the browser control unit 370 is an example of a state related information acquiring unit and an output control unit.

Fig. 9D shows an example of a display image AI8 of support information. The display image AI8 is an image of a page including support information corresponding to a specific state of the target model represented by the specified display state of the display lamps out of a plurality of Web pages provided by the server 60. As shown in Fig. 9D, this page is a page which is created when the target model becomes the specific state assuming that the user of the target model refers to the page. The page illustrated in Fig. 9D is a page corresponding to a state in which the amount of residual toner is smaller than a reference value, and includes a message MS including the description of the state and a handling method, such as a toner replacement method or a purchase method.

According to the above-described illustrative embodiment, the input information representing the display state of one or more display lamps (for example, the five display lamps 11 to 15 (Fig. 3)) is acquired from the user. The URL of the support information according to the specific state (for example, the error state, such as toner empty) of the printer (for example, the printer 200 shown in Figs. 1 to 3) of the target model corresponding to the display state of the display lamps specified by the acquired input information is acquired. The support information is acquired based on the acquired URL and displayed on the display unit 470 of the portable terminal 400. As a result, the portable terminal 400 can provide appropriate information according to the state of the printer 200 to the user.

For example, if an error occurs in the printer 200, there is a case where the printer 200 does not easily provide sufficient information associated with the error, which currently occurs in the printer 200, to the user. In particular, like the printer 200 of this illustrative embodiment, in the case of a printer including no liquid crystal display, it is comparatively difficult to provide sufficient information to the user with the printer 200 alone. As a result, there is a possibility that the user needs to perform a bothersome operation to examine the meaning of the display state of the display lamps referring to a manual or the like.

It can be considered that necessary information is printed by the printer 200 and information is provided to the user. However, if the printer 200 is in the error state, such as toner empty or paper jam, in which printing is impossible, it is not possible to provide information. Further, it can be considered that error information is transmitted from the printer 200 to a personal computer embedded with a printer driver and the error information is displayed on the personal computer. However, if the personal computer is away from the printer, this causes inconvenience. If communication failure between the printer and the personal computer occurs, it is not possible to provide information.

According to this illustrative embodiment, the portable terminal 400 allows the user to input the display state of the display lamps 11 to 15 of the printer 200, whereby it is possible to easily provide appropriate support information according to the state of the printer 200. The portable terminal 400 can provide necessary support information regardless of the type of error state (communication failure with an external apparatus or error, such as paper jam, for which printing is impossible) of the printer 200.

If the support information is stored in the non-volatile storage device 220 of the printer 200 or the non-volatile storage device 420 of the portable terminal 400, there is a possibility that it is difficult to provide sufficient support information from the viewpoint of capacity restriction. In order to update the support information, there is a possibility that a complicated procedure (for example, download of an update file, or the like) may be required or an operation burden imposed on the user with the update increases. In this illustrative embodiment, since the portable terminal 400 acquires the support information from the server connected through the network (for example, Internet 70), it is possible to easily provide sufficient and latest information to the user.

Even if the server 60 provides sufficient support information as a Web service, there is a possibility that the support information is not sufficiently utilized by the user. For example, a large burden is imposed on the user when locating desired support information out of the support information group 651 including multiple support information. For example, an operation to search desired support information with the links of a plurality of Web pages classified in a plurality of classes is comparatively bothersome. However, according to this illustrative embodiment, if the display state of the display lamps input by the user represents that the printer is in the first state, the first URL is acquired, and if the display state of the display lamps represents that the printer is in the second state, the second URL is acquired. As a result, by inputting the display state of the plurality of display lamps 11 to 15, the user can easily obtain the support information associated with the state of the printer 200.

Since the support information to be provided is displayed based on the display state of the plurality of display lamps 11 to 15, it is not necessary that the printer 200 stores special information (for example, information, such as a URL or a QR code (Registered Trademark)) for specifying the support information to be provided in advance. As a result, in regard to the support information of the already shipped printer 200 having no special information, it is possible to easily provide appropriate support information based on the display state of the display lamps of the shipped printer.

The information providing unit 300 acquires product information for identifying the type of printer, and acquires a URL in accordance with the display state of the display lamps input by the user and the type (target model) of printer represented by the product information. Accordingly, it is possible to display appropriate state related information on the portable terminal 400 in accordance with the type of printer. For example, even if the states of the printers are identical, if the models of the printers are different, the support information to be provided may be different. For example, in regard to support information relating to toner empty, the product number of corresponding toner or the like may differ depending on the model.

In the above-described illustrative embodiment, the information providing unit 300 acquires feature information representing features associated with a display lamp different between respective models (target model) of printer, and displays an image for receiving the input from the user on the display unit 470 using the feature information. As a result, it is possible to display an appropriate reception image in accordance with the features of each model.

Specifically, the information providing unit 300 displays the input reception image AI3 (Fig. 8C) including different partial images PI for each target model on the display unit 470. In the input reception image AI3, the plurality of display lamps 11 to 15 in the partial image PI are associated with the plurality of fields DF1 to DF5 for receiving the input of the display state of the plurality of display lamps 11 to 15. Accordingly, it is possible to allow the user to easily input information representing the display state of the display lamps.

The display state selection images AI4 and AI5 include a selection image (selection region) for allowing the user to select one option out of a plurality of options corresponding to a plurality of allowable display states of a corresponding display lamp (Fig. 8D and 9A). The user just selects an option displayed for each display lamp in the reception image, thereby easily inputting information representing the display state of the display lamps. Only an option corresponding to an allowable display state of the display lamp is displayed, and an option corresponding to a non-allowable display state is not displayed. As a result, it is possible to reduce an operation burden imposed on the user.

### B. Modified Illustrative Embodiment

(1) In the information providing processing according to the above-described illustrative embodiment, the identification information acquiring unit 340 acquires the URL from the URL table DT1 stored in the non-volatile storage device 420 of the portable terminal 400. Alternatively, in an arrangement not falling within the claimed scope of the invention, the URL may be acquired from the server 60. In said alternative, as indicated by a broken line in Fig. 1, the identification information acquiring unit 340 may include a state information transmission unit 345. In the non-claimed alternative processing of Fig. 7, Steps S100A to S102A may be executed, instead of Step S100. In Step S100A, the state information transmission unit 345 of the identification information acquiring unit 340 transmits state information representing the state of the printer acquired in Step S80 and model information representing the target model to the server 60. The server 60 replies a URL corresponding to the combination of the received state information and model information to the portable terminal 400. In Step S102A, the identification information acquiring unit 340 acquires (receives) the corresponding URL from the server 60. In this case, in the server 60, even if an administrator of the server updates a Web page which provides support information, and the URL is updated, the portable terminal 400 can acquire the support information without problem. A server which becomes a URL acquisition source may be different from a server which becomes a support information acquisition source.
(2) In the above-described illustrative embodiment, although a printer is illustrated as a product, alternatively, a different electronic apparatus, for example, a scanner including a print function and a scanner function, a stand-alone scanner, or the like may be used.
(3) The input reception image AI3 of Fig. 8B may include only the fields DF1 to DF5 without including the partial image PI. In the above-described illustrative embodiment, as the reception elements for inputting the display state of the respective display lamps, the fields DF1 to DF5 (Fig. 8C) or the combinations of the options of the display form and the radio buttons RB for selecting the options (Fig. 8D or 9A) are illustrated. However, the form of these reception elements is not limited to the above-described illustrative embodiment. For example, the options corresponding to a plurality of allowable display state of the display lamps may be presented to the user using a pull-down menu. In this case, a pull-down menu is displayed in association with each of the plurality of fields DF1 to DF5 corresponding to the plurality of display lamps 11 to 15. The number of options in the pull-down menu or details may differ depending on the target model or the display lamps. The fields DF1 to DF5 may be fields of a type of directly inputting characters to input the input information representing the display form of the display lamps.
(4) The acquiring (the reception of the selection of the target model) of the product information may be omitted. That is, the information providing unit 300 may be realized by a dedicated application program (for example, an attachment program of a product) for one model. In the above-described illustrative embodiment, although the product information for identifying the model of the printer is acquired when the radio button RB corresponding to a desired model is selected by the user, the product information, such as a model number, may be acquired by the input of the user through the buttons of the portable terminal 400.
(5) In the above-described illustrative embodiment, although the portable terminal 400 and the server 60 cooperate to provide the support information to the user, the support information may be provided by the portable terminal 400 alone. In this case, the support information of all items of all target models may be stored in the non-volatile storage device 420 of the portable terminal 400. In this case, it should suffice that the information providing unit 300 of the portable terminal 400 acquires corresponding support information from the non-volatile storage device 420 based on identification information (for example, an error item name or an address in the non-volatile storage device 220) corresponding to the display state of the display lamps input by the user. The support information may be stored in the non-volatile storage device 220 of the printer 200. In this case, for example, the portable terminal 400 may specify the IP address of the printer, thereby acquiring support information from the printer 200, instead of the server 60.
(6) In the above-described illustrative embodiment, support information, such as a solution to an error, is illustrated as state related information. However, the present invention is not limited thereto, and state related information may be information associated with the normal state of the printer, for example, description of a specific operation method of printing processing or description of each setting item and a specific method of setting a setting item. The state related information is not limited to the form of being displayed on the display unit 470, and the state related information may be output from the portable terminal 400 in another form. For example, a guide voice of an operation method or the like of the printer 200 may be output as the state related information from (on) the portable terminal 400.
(7) Various kinds of information used in the above-described information providing processing, a list of product information (model number or the like) displayed in the model selection image AI1 or information recorded in various tables shown in Figs. 4 and 5 is stored in the non-volatile storage device 420 in advance. In contrast, these kinds of information may be acquired from the server 60 and temporarily stored in the volatile storage device 425 as necessary.
(8) In the above-described illustrative embodiment, a part of the configuration realized by hardware may be substituted with software, and conversely, a part of the configuration realized by software may be substituted with hardware.
(9) If a part or all of the functions of the present invention are realized by software, software (computer program) can be provided in the form stored in a computer-readable recording medium. The "computer-readable recording medium" is not limited to a portable recording medium, such as a memory card or a CD-ROM, and includes an internal storage device in the computer, such as various RAMs or ROMs, or an external storage device connected to the computer, such as a hard disk drive.

While the present invention has been shown and described with reference to certain illustrative embodiments thereof, it will be understood by those skilled in the art that various changes in form and details may be made therein without departing from the scope of the invention as defined by the appended claims.

## Claims

1. A computer program for a terminal device (400) which causes a computer provided in the terminal device (400) to perform:
an input information acquiring function (S50-S80) of acquiring input information input by a user, wherein the input information is information relating to a display state of a plurality of display lamps (11-15) arranged in a target product (200) to represent a state of the target product (200);
an identification information acquiring function (S100) of acquiring identification information for identifying state related information according to the display state of the plurality of display lamps (11-15) specified by the input information, wherein the state related information is information relating to the state of the target product (200) corresponding to the specified display state of the plurality of display lamps (11-15);
a state related information acquiring function (S110) of acquiring the state related information based on the acquired identification information; and
an output control function (S115) of outputting the acquired state related information on the terminal device (400); **characterized in that**:
the state related information acquiring function (S110) acquires the state related information from a server (60) connected through a network (70),
the server (60) comprises a storage unit including a first storage region, and a second storage region, and
the state related information acquiring function (S110) acquires first state related information from the first storage region using a first URL stored in the terminal device (400) and associated with a first display state of the plurality of display lamps (11-15) as first identification information, and acquires second state related information from the second storage region using a second URL stored in the terminal device (400) and associated with a second display state of the plurality of display lamps (11-15) as second identification information.

2. The computer program according to claim 1,
wherein the identification information acquiring function (S110) acquires the identification information from a storage unit (420) in the terminal device (400).

3. The computer program according to claim 1 or 2, further causing the computer to perform:
a product information acquiring function (S25) of acquiring product information for identifying a type of the target product (200),
wherein the identification information acquiring function (S100) acquires the identification information for identifying the state related information according to the product information and the specified display state of the plurality of display lamps (11-15).

4. The computer program according to any one of claims 1 to 3, further causing the computer to perform:
a feature information acquiring function (S30) of acquiring feature information representing a feature associated with the plurality of display lamps (11-15) which are different between types of the target product (200),
wherein the input information acquiring function (S50-S80) includes a reception image display function (S55) of displaying a reception image by using the feature information, the reception image being for receiving input of the input information by the user on a display unit (470) of the terminal device (400).

5. The computer program according to claim 4,
wherein the feature information includes product (200) image data which represents an image of a specific region on the target product, the specific region including the plurality display lamps (11-15), and
wherein the reception image display function (S55) displays the reception image including the image of the specific region, on the display unit (470).

6. The computer program according to claim 5,
wherein the reception image includes:
a first reception element (DF) which is associated with a position of a first display lamp (11-15) in the image of the specific region (100) to receive input of information representing a display state of the first display lamp (11-15), and
a second reception element (DF) which is associated with a position of a second display lamp (11-15) in the image of the specific region (100) to receive input of information representing a display state of the second display lamp (11-15).

7. The computer program according to claim 4 or 5,
wherein the feature information includes information representing a plurality of allowable display states which a first display lamp is allowable to represent, and information representing a plurality of allowable display states which a second display lamp is allowable to represent,
wherein the reception image includes:
a first reception element (DF) for receiving input of the input information representing the display state of the first display lamp; and
a second reception element (DF) for receiving input of the input information representing the display state of the second display lamp,
wherein the first reception element in the reception image includes a selection region for allowing the user to select one option among M options corresponding to M allowable display states, where M is a natural number equal to or greater than two, of the first display lamp, and
wherein the second reception element in the reception image includes a selection region for allowing the user to select one option among N options corresponding to N allowable display states, where N is a natural number larger than M and is equal to or greater than three, of the second display lamp.

8. The computer program according to any one of claims 1 to 3,
wherein the input information acquiring function (S50-S80) includes a reception image display function (S65) of displaying a first reception image for receiving input of the input information on a display unit (470) of the terminal device (400), and
wherein when receiving input of the input information, the reception image display function (S75) displays a second reception image obtained by updating the first reception image according to the input information on the display unit, instead of the first reception image.

9. The computer program according to any one of claims 1 to 3,
wherein the identification information acquiring function (S100) acquires:
when the display state of the plurality of display lamps (11-15) represented by the input information represents that the target product is in a first state, the identification information for identifying first state related information, and
when the display state of the plurality of display lamps (11-15) represented by the input information represents that the target product is in a second state, the identification information for identifying second state related information.

10. The computer program according to any one of claims 1 to 3,
wherein the input information acquiring function includes a reception image display function of displaying a reception image, the reception image being for receiving input of the input information by the user.

11. The computer program according to any one of claims 1 to 10,
wherein the input information is input through an operating unit (460) including a touch panel.

12. A terminal device (400), comprising:
an input information acquiring unit configured to acquire input information input by a user, wherein the input information is information relating to a display state of a plurality of display lamps (11-15) arranged in a target product (200) to represent a state of the target product (200);
an identification information acquiring unit configured to acquire identification information for identifying state related information according to the display state of the plurality display lamps (11-15) specified by the input information, wherein the state related information is information relating to the state of the target product (200) corresponding to the specified display state of the plurality of display lamps (11-15);
a state related information acquiring unit configured to acquire the state related information based on the acquired identification information; and
an output control unit configured to output the acquired state related information on the terminal device (400); **characterized in that**:
the state related information acquiring unit is configured to acquire the state related information from a server (60) connected through a network (70), the server (60) comprising a storage unit including a first storage region, and a second storage region; and
the state related information acquiring unit is configured to acquire first state related information from the first storage region using a first URL stored in the terminal device (400) and associated with a first display state of the plurality of display lamps (11-15) as first identification information, and to acquire second state related information from the second storage region using a second URL stored in the terminal device (400) and associated with a second display state of the plurality of display lamps (11-15) as second identification information.

## Patentansprüche

1. Computerprogramm für ein Endgerät (400), das einen in dem Endgerät (400) bereitgestellten Computer veranlasst, Folgendes auszuführen:
eine Eingabeinformations-Erfassungsfunktion (S50-S80) zum Erfassen von Eingabeinformationen, die von einem Nutzer eingegeben werden, wobei die Eingabeinformationen Informationen sind, die sich auf einen Anzeigezustand einer Vielzahl von Anzeigelampen (11-15) beziehen, die in einem Zielprodukt (200) angeordnet sind, um einen Zustand des Zielprodukts (200) darzustellen;
eine Identifikationsinformations-Erfassungsfunktion (S100) zum Erfassen von Identifikationsinformationen zum Identifizieren von zustandsbezogenen Informationen gemäß dem durch die Eingangsinformationen spezifizierten Anzeigezustand der Vielzahl von Anzeigelampen (11-15), wobei die zustandsbezogenen Informationen Informationen bezüglich des Zustands des Zielprodukts (200) entsprechend dem spezifizierten Anzeigezustand der Vielzahl von Anzeigelampen (11-15) sind;
eine Erfassungsfunktion für zustandsbezogene Informationen (S110) zum Erfassen der zustandsbezogenen Informationen beruhend auf den erfassten Identifizierungsinformationen; und
eine Ausgabesteuerungsfunktion (S115) zum Ausgeben der erfassten zustandsbezogenen Informationen an dem Endgerät (400); **dadurch gekennzeichnet, dass**:
die Erfassungsfunktion für zustandsbezogene Informationen (S110) die zustandsbezogenen Informationen von einem über ein Netzwerk (70) verbundenen Server (60) erfasst,
der Server (60) eine Speichereinheit umfasst, die einen ersten Speicherbereich und einen zweiten Speicherbereich enthält, und
die Erfassungsfunktion für zustandsbezogene Informationen (S110) erste zustandsbezogene Informationen aus dem ersten Speicherbereich unter Verwendung einer ersten URL erfasst, die in dem Endgerät (400) gespeichert und mit einem ersten Anzeigezustand der Vielzahl von Anzeigelampen (11-15) als erste Identifikationsinformationen assoziiert ist, und zweite zustandsbezogene Informationen aus dem zweiten Speicherbereich unter Verwendung einer zweiten URL erfasst, die in dem Endgerät (400) gespeichert und mit einem zweiten Anzeigezustand der Vielzahl von Anzeigelampen (11-15) als zweite Identifikationsinformation assoziiert ist.

2. Computerprogramm nach Anspruch 1,
wobei die Identifikationsinformations-Erfassungsfunktion (S110) die Identifikationsinformationen von einer Speichereinheit (420) in dem Endgerät (400) erfasst.

3. Computerprogramm nach Anspruch 1 oder 2, das den Computer ferner veranlasst, Folgendes auszuführen:
eine Produktinformations-Erfassungsfunktion (S25) zum Erfassen von Produktinformationen zum Identifizieren eines Typs des Zielprodukts (200),
wobei die Identifikationsinformations-Erfassungsfunktion (S100) die Identifikationsinformationen zum Identifizieren der zustandsbezogenen Information gemäß den Produktinformationen und dem spezifizierten Anzeigezustand der Vielzahl von Anzeigelampen (11-15) erfasst.

4. Computerprogramm nach einem der Ansprüche 1 bis 3, wobei der Computer ferner veranlasst, Folgendes auszuführen:
eine Merkmalsinformations-Erfassungsfunktion (S30) zum Erfassen von Merkmalsinformationen, die ein Merkmal darstellen, das mit der Vielzahl von Anzeigelampen (11-15) assoziiert ist, die zwischen Typen des Zielprodukts (200) verschieden sind,
wobei die Eingangsinformations-Erfassungsfunktion (S50-S80) eine Empfangsbild-Anzeigefunktion (S55) zum Anzeigen eines Empfangsbilds unter Verwendung der Merkmalsinformationen umfasst, wobei das Empfangsbild zum Empfangen einer Eingabe der Eingangsinformationen durch den Nutzer an einer Anzeigeeinheit (470) des Endgeräts (400) dient.

5. Computerprogramm nach Anspruch 4,
wobei die Merkmalsinformationen Bilddaten des Produkts (200) enthalten, die ein Bild eines bestimmten Bereichs auf dem Zielprodukt darstellen, wobei der spezifische Bereich die mehreren Anzeigelampen (11-15) enthält, und
wobei die Empfangsbild-Anzeigefunktion (S55) das Empfangsbild einschließlich des Bilds des spezifischen Bereichs auf der Anzeigeeinheit (470) anzeigt.

6. Computerprogramm nach Anspruch 5,
wobei das Empfangsbild Folgendes enthält:
ein erstes Empfangselement (DF), das mit einer Position einer ersten Anzeigelampe (11-15) in dem Bild des spezifischen Bereichs (100) assoziiert ist, um eine Eingabe von Informationen zu empfangen, die einen Anzeigezustand der ersten Anzeigelampe (11-15) darstellen, und
ein zweites Empfangselement (DF), das mit einer Position einer zweiten Anzeigelampe (11-15) in dem Bild des spezifischen Bereichs (100) assoziiert ist, um eine Eingabe von Informationen zu empfangen, die einen Anzeigezustand der zweiten Anzeigelampe (11-15) darstellen.

7. Computerprogramm nach Anspruch 4 oder 5,
wobei die Merkmalsinformationen Informationen enthalten, die eine Vielzahl von zulässigen Anzeigezuständen darstellen, die eine erste Anzeigelampe darstellen darf, und Informationen, die eine Vielzahl von zulässigen Anzeigezuständen darstellen, die eine zweite Anzeigelampe darstellen darf,
wobei das Empfangsbild Folgendes enthält:
ein erstes Empfangselement (DF) zum Empfangen der Eingangsinformationen, die den Anzeigezustand der ersten Anzeigelampe darstellen; und
ein zweites Empfangselement (DF) zum Empfangen einer Eingabe der Eingangsinformationen, die den Anzeigezustand der zweiten Anzeigelampe darstellt, wobei das erste Empfangselement in dem Empfangsbild einen Auswahlbereich enthält, der es dem Nutzer ermöglicht, eine Option unter M Optionen entsprechend M zulässigen Anzeigezuständen, wobei M eine natürliche Zahl gleich wie oder größer als zwei ist, der ersten Anzeigelampe auszuwählen, und
wobei das zweite Empfangselement in dem Empfangsbild einen Auswahlbereich enthält, um dem Nutzer zu ermöglichen, eine Option unter N Optionen entsprechend N zulässigen Anzeigezuständen, wobei N eine natürliche Zahl größer als M und gleich wie oder größer als drei ist, der zweiten Anzeigeleuchte auszuwählen.

8. Computerprogramm nach einem der Ansprüche 1 bis 3,
wobei die Eingangsinformations-Erfassungsfunktion (S50-S80) eine Empfangsbild-Anzeigefunktion (S65) zum Anzeigen eines ersten Empfangsbildes zum Empfangen einer Eingabe der Eingangsinformationen auf einer Anzeigeeinheit (470) des Endgeräts (400) enthält, und
wobei die Empfangsbild-Anzeigefunktion (S75) beim Empfangen einer Eingabe der Eingangsinformationen ein zweites Empfangsbild anzeigt, das durch Aktualisieren des ersten Empfangsbilds gemäß den Eingangsinformationen auf der Anzeigeeinheit anstelle des ersten Empfangsbilds erlangt wird.

9. Computerprogramm nach einem der Ansprüche 1 bis 3,
wobei die Identifikationsinformations-Erfassungsfunktion (S100) Folgendes erfasst:
wenn der Anzeigezustand der Vielzahl von Anzeigelampen (11-15), die durch die Eingangsinformationen dargestellt werden, anzeigt, dass sich das Zielprodukt in einem ersten Zustand befindet, die Identifizierungsinformationen zum Identifizieren erster zustandsbezogener Informationen, und
wenn der Anzeigezustand der Vielzahl von Anzeigelampen (11-15), die durch die Eingangsinformationen dargestellt werden, anzeigt, dass sich das Zielprodukt in einem zweiten Zustand befindet, die Identifizierungsinformationen zum Identifizieren zweiter zustandsbezogener Informationen.

10. Computerprogramm nach einem der Ansprüche 1 bis 3,
wobei die Eingangsinformations-Erfassungsfunktion eine Empfangsbild-Anzeigefunktion zum Anzeigen eines Empfangsbilds enthält, wobei das Empfangsbild zum Empfangen einer Eingabe der Eingangsinformationen durch den Nutzer dient.

11. Computerprogramm nach einem der Ansprüche 1 bis 10,
wobei die Eingabeinformationen über eine Bedieneinheit (460) einschließlich eines Touchpanels eingegeben werden.

12. Endgerät (400), umfassend:
eine Eingabeinformations-Erfassungseinheit, die konfiguriert ist, um von einem Nutzer eingegebene Eingabeinformationen zu erfassen, wobei die Eingabeinformationen Informationen sind, die sich auf einen Anzeigezustand einer Vielzahl von Anzeigelampen (11-15) beziehen, die in einem Zielprodukt (200) angeordnet sind, um einen Zustand des Zielprodukts (200) darzustellen;
eine Identifikationsinformations-Erfassungseinheit, die konfiguriert ist, um Identifikationsinformationen zum Identifizieren von zustandsbezogenen Informationen gemäß dem durch die Eingangsinformationen spezifizierten Anzeigezustand der Vielzahl von Anzeigelampen (11-15) zu erfassen, wobei die zustandsbezogenen Informationen Informationen bezüglich des Zustands des Zielprodukts (200) entsprechend dem spezifizierten Anzeigezustand der Vielzahl von Anzeigelampen (11-15) sind;
eine Erfassungseinheit für zustandsbezogene Informationen, die konfiguriert ist, um die zustandsbezogenen Informationen auf der Grundlage der erfassten Identifikationsinformationen zu erfassen; und
eine Ausgabesteuereinheit, die konfiguriert ist, um die erfassten zustandsbezogenen Informationen auf dem Endgerät (400) auszugeben; **dadurch gekennzeichnet, dass**:
die Erfassungseinheit für zustandsbezogene Informationen konfiguriert ist, um die zustandsbezogenen Informationen von einem über ein Netzwerk (70) verbundenen Server (60) zu erfassen, wobei der Server (60) eine Speichereinheit umfasst, die einen ersten Speicherbereich und einen zweiten Speicherbereich enthält; und
die Erfassungseinheit für zustandsbezogene Informationen konfiguriert ist, um erste zustandsbezogene Informationen aus dem ersten Speicherbereich unter Verwendung einer ersten URL zu erfassen, die in dem Endgerät (400) gespeichert und mit einem ersten Anzeigezustand der Vielzahl von Anzeigelampen (11-15) als erste Identifikationsinformationen assoziiert ist, und zweite zustandsbezogene Informationen aus dem zweiten Speicherbereich unter Verwendung einer zweiten URL zu erfassen, die in dem Endgerät (400) gespeichert und mit einem zweiten Anzeigezustand der Vielzahl von Anzeigelampen (11-15) als zweite Identifikationsinformation assoziiert ist.

## Revendications

1. Programme d'ordinateur pour un dispositif terminal (400) qui fait en sorte qu'un ordinateur prévu dans le dispositif terminal (400) réalise :
une fonction d'acquisition d'informations d'entrée (S50-S80) de l'acquisition d'informations d'entrée entrées par un utilisateur, dans lequel les informations d'entrée sont des informations concernant un état d'affichage d'une pluralité de lampes d'affichage (11-15) agencées dans un produit cible (200) pour représenter un état du produit cible (200) ;
une fonction d'acquisition d'informations d'identification (S100) de l'acquisition d'informations d'identification pour identifier des informations connexes à l'état selon l'état d'affichage de la pluralité de lampes d'affichage (11-15) spécifié par les informations d'entrée, dans lequel les informations connexes à l'état sont des informations concernant l'état du produit cible (200) correspondant à l'état d'affichage spécifié de la pluralité de lampes d'affichage (11-15) ;
une fonction d'acquisition d'informations connexes à l'état (S110) de l'acquisition des informations connexes à l'état sur la base des informations d'identification acquises ; et
une fonction de commande de sortie (S115) de la sortie des informations connexes à l'état acquises sur le dispositif terminal (400) ; **caractérisé en ce que** :
la fonction d'acquisition d'informations connexes à l'état (S110) acquiert les informations connexes à l'état à partir d'un serveur (60) connecté par l'intermédiaire d'un réseau (70),
le serveur (60) comprend une unité de stockage incluant une première région de stockage, et une seconde région de stockage, et
la fonction d'acquisition d'informations connexes à l'état (S110) acquiert des premières informations connexes à l'état à partir de la première région de stockage en utilisant une première URL stockée dans le dispositif terminal (400) et associée à un premier état d'affichage de la pluralité de lampes d'affichage (11-15) en tant que premières informations d'identification, et acquiert des secondes informations connexes à l'état à partir de la seconde région de stockage en utilisant une seconde URL stockée dans le dispositif terminal (400) et associée à un second état d'affichage de la pluralité de lampes d'affichage (11-15) en tant que secondes informations d'identification.

2. Programme d'ordinateur selon la revendication 1,
dans lequel la fonction d'acquisition d'informations d'identification (S110) acquiert les informations d'identification à partir d'une unité de stockage (420) dans le dispositif terminal (400).

3. Programme d'ordinateur selon la revendication 1 ou 2, faisant en outre en sorte que l'ordinateur réalise :
une fonction d'acquisition d'informations de produit (S25) de l'acquisition d'informations de produit pour identifier un type du produit cible (200),
dans lequel la fonction d'acquisition d'informations d'identification (S100) acquiert les informations d'identification pour identifier les informations connexes à l'état selon les informations de produit et l'état d'affichage spécifié de la pluralité de lampes d'affichage (11-15).

4. Programme d'ordinateur selon l'une quelconque des revendications 1 à 3, faisant en outre en sorte que l'ordinateur réalise :
une fonction d'acquisition d'informations de caractéristique (S30) de l'acquisition d'informations de caractéristique représentant une caractéristique associée à la pluralité de lampes d'affichage (11-15) qui sont différentes entre des types du produit cible (200),
dans lequel la fonction d'acquisition d'informations d'entrée (S50-S80) inclut une fonction d'affichage d'image de réception (S55) de l'affichage d'une image de réception en utilisant les informations de caractéristique, l'image de réception étant destinée à la réception d'une entrée, réalisée par l'utilisateur, des informations d'entrée sur une unité d'affichage (470) du dispositif terminal (400).

5. Programme d'ordinateur selon la revendication 4,
dans lequel les informations de caractéristique incluent des données d'image du produit (200) qui représentent une image d'une région spécifique sur le produit cible, la région spécifique incluant la pluralité lampes d'affichage (11-15), et
dans lequel la fonction d'affichage d'image de réception (S55) affiche l'image de réception incluant l'image de la région spécifique, sur l'unité d'affichage (470).

6. Programme d'ordinateur selon la revendication 5,
dans lequel l'image de réception inclut :
un premier élément de réception (DF) qui est associé à une position d'une première lampe d'affichage (11-15) dans l'image de la région spécifique (100) pour recevoir une entrée d'informations représentant un état d'affichage de la première lampe d'affichage (11-15), et
un second élément de réception (DF) qui est associée à une position d'une seconde lampe d'affichage (11-15) dans l'image de la région spécifique (100) pour recevoir une entrée d'informations représentant un état d'affichage de la seconde lampe d'affichage (11-15).

7. Programme d'ordinateur selon la revendication 4 ou 5,
dans lequel les informations de caractéristique incluent des informations représentant une pluralité d'états d'affichage possibles qu'une première lampe d'affichage peut représenter, et des informations représentant une pluralité d'états d'affichage possibles qu'une seconde lampe d'affichage peut représenter,
dans lequel l'image de réception inclut :
un premier élément de réception (DF) pour recevoir une entrée des informations d'entrée représentant l'état d'affichage de la première lampe d'affichage ; et
un second élément de réception (DF) pour recevoir une entrée des informations d'entrée représentant l'état d'affichage de la seconde lampe d'affichage, dans lequel le premier élément de réception dans l'image de réception inclut une région de sélection pour permettre à l'utilisateur de sélectionner une option parmi M options correspondant à M états d'affichage possibles, où M est un nombre naturel égal ou supérieur à deux, de la première lampe d'affichage, et
dans lequel le second élément de réception dans l'image de réception inclut une région de sélection pour permettre à l'utilisateur de sélectionner une option parmi N options correspondant à N états d'affichage possibles, où N est un nombre naturel supérieur à M et est égal ou supérieur à trois, de la seconde lampe d'affichage.

8. Programme d'ordinateur selon l'une quelconque des revendications 1 à 3,
dans lequel la fonction d'acquisition d'informations d'entrée (S50-S80) inclut une fonction d'affichage d'image de réception (S65) de l'affichage d'une première image de réception pour recevoir une entrée des informations d'entrée sur une unité d'affichage (470) du dispositif terminal (400), et
dans lequel lors de la réception d'une entrée des informations d'entrée, la fonction d'affichage d'image de réception (S75) affiche une seconde image de réception obtenue en mettant à jour la première image de réception selon les informations d'entrée sur l'unité d'affichage, au lieu de la première image de réception.

9. Programme d'ordinateur selon l'une quelconque des revendications 1 à 3,
dans lequel la fonction d'acquisition d'informations d'identification (S100) acquiert :
lorsque l'état d'affichage de la pluralité de lampes d'affichage (11-15) représentées par les informations d'entrée représente le fait que le produit cible est dans un premier état, les informations d'identification pour identifier des premières informations connexes à l'état, et
lorsque l'état d'affichage de la pluralité de lampes d'affichage (11-15) représentées par les informations d'entrée représente le fait que le produit cible est dans un second état, les informations d'identification pour identifier des secondes informations connexes à l'état.

10. Programme d'ordinateur selon l'une quelconque des revendications 1 à 3,
dans lequel la fonction d'acquisition d'informations d'entrée inclut une fonction d'affichage d'image de réception de l'affichage d'une image de réception, l'image de réception étant destinée à la réception d'une entrée, réalisée par l'utilisateur, des informations d'entrée.

11. Programme d'ordinateur selon l'une quelconque des revendications 1 à 10,
dans lequel les informations d'entrée sont entrées par l'intermédiaire d'une unité d'exploitation (460) incluant un écran tactile.

12. Dispositif terminal (400), comprenant :
une unité d'acquisition d'informations d'entrée configurée pour acquérir des informations d'entrée entrées par un utilisateur, dans lequel les informations d'entrée sont des informations concernant un état d'affichage d'une pluralité de lampes d'affichage (11-15) agencées dans un produit cible (200) pour représenter un état du produit cible (200) ;
une unité d'acquisition d'informations d'identification configurée pour acquérir des informations d'identification pour identifier des informations connexes à l'état selon l'état d'affichage de la pluralité lampes d'affichage (11-15) spécifié par les informations d'entrée, dans lequel les informations connexes à l'état sont des informations concernant l'état du produit cible (200) correspondant à l'état d'affichage spécifié de la pluralité de lampes d'affichage (11-15) ;
une unité d'acquisition d'informations connexe à l'état configurée pour acquérir les informations connexes à l'état sur la base des informations d'identification acquises ; et
une unité de commande de sortie configurée pour produire en sortie les informations connexes à l'état acquises sur le dispositif terminal (400) ; **caractérisé en ce que** :
l'unité d'acquisition d'informations connexes à l'état est configurée pour acquérir les informations connexes à l'état à partir d'un serveur (60) connecté par l'intermédiaire d'un réseau (70), le serveur (60) comprenant une unité de stockage incluant une première région de stockage, et une seconde région de stockage ; et
l'unité d'acquisition d'informations connexes à l'état est configurée pour acquérir des premières informations connexes à l'état à partir de la première région de stockage en utilisant une première URL stockée dans le dispositif terminal (400) et associée à un premier état d'affichage de la pluralité de lampes d'affichage (11-15) en tant que premières informations d'identification, et pour acquérir des secondes informations connexes à l'état à partir de la seconde région de stockage en utilisant une seconde URL stockée dans le dispositif terminal (400) et associée à un second état d'affichage de la pluralité de lampes d'affichage (11-15) en tant que secondes informations d'identification.
